# EUROPÄISCHE PATENTSCHRIFT

(11) **EP 0 677 438 B1**
(45) Veröffentlichungstag und Bekanntmachung des Hinweises auf die Patenterteilung: **10.06.1998**
(21) Anmeldenummer: 95103923.9
(22) Anmeldetag: 17.03.1995
(51) Int. Cl.: B64C 1/14

(54) **Türsystem, insbesondere für ein Passagierflugzeug**
Door system, in particular for a passenger aircraft
Système de porte, en particulier pour avion servant au transport de passagers

(30) Priorität: 16.04.1994 DE 4413307
(43) Veröffentlichungstag der Anmeldung: 18.10.1995
(73) Patentinhaber: EUROCOPTER DEUTSCHLAND GmbH, D-81663 München (DE)
(72) Erfinder: Erben, Hannes, D-70569 Stuttgart (DE); Buchs, Wolfgang, D-86609 Donauwörth (DE)
(74) Vertreter: Hummel, Adam

(56) Entgegenhaltungen:
- EP-A- 0 188 825
- EP-A- 0 330 814
- EP-A- 0 465 785

## Beschreibung

Die Erfindung bezieht sich auf ein Türsystem, insbesondere für ein Passagierflugzeug, nach dem Oberbegriff des Patentanspruchs 1.

Aufschwenkende Türsysteme dieser Art, wie sie in modernen Passagierflugzeugen Verwendung finden, sind vom sogenannten "Plug"-Typ, d.h. das Türblatt ist in der vollständigen Schließlage mit randseitigen, türblattfesten Anlagebeschlägen in einen formschlüssigen Eingriff mit entsprechenden, im Bereich des Türausschnittes an der Rumpfstruktur befestigten Aufnahmeelementen abgesenkt, um so die hohen Druckkräfte, die aufgrund der Druckdifferenz zwischen Kabineninnen- und -außendruck während des Fluges auf das Türblatt einwirken, unmittelbar und ohne Zwischenschaltung mechanisch bewegter Sperrelemente vom Türblatt auf die Rumpfstruktur zu übertragen und dadurch ein Aufspringen der Tür bei einem Versagen der Sperrmechanik zu verhindern. Zum Öffnen muß das Türblatt zunächst aus dem formschlüssigen Eingriff mit den Aufnahmeelementen angehoben werden, bevor es anschließend unter der Steuerung einer zwischen Türblatt und Rumpfstruktur wirkenden Trag- und Führungseinrichtung im wesentlichen senkrecht zur Hubbewegung nach außen aus dem Türausschnitt aufgeschwenkt und dann in seitlicher Richtung parallel zum Rumpf in die volle Öffnungslage verfahren wird. Damit das Türblatt durch Vibrations- oder Stoßeinwirkungen nicht von allein aus der voll abgesenkten Hubposition auswandern und dadurch von den rumpffesten Aufnahmeelementen freikommen kann, ist zusätzlich zum Hubantrieb eine Türblattverriegelung vorgesehen.

Diese besteht bei den aus der EP-A-0 465 785 bekannten Türsystemen der eingangs genannten Art aus randseitig am Türblatt angeordneten Verriegelungselementen, durch die das Türblatt in der vollständigen Schließlage hubfest mit dem Türrahmen verkoppelt wird. Während bei diesem bekannten Türsystem der Hubantrieb und die Türblatt-Verriegelung jeweils durch separate Elektromotoren bewirkt werden, wird bei dem aus der EP-A-0 188 825 bekannten Türsystem zur Verringerung des Ausfallrisikos auf fremdenergiebetätigte, elektrische Antriebe verzichtet und stattdessen die Hubbewegung auf rein mechanischem Wege durch einen handbetätigten Hubmechanismus in Form eines auf der Türblatt-Innenseite angeordneten Hubgestänges erzeugt, welches unter Zwischenschaltung eines hubkraftunterstützenden Torsionsfederantriebs einerseits an ein zwischen Türblatt und Trag- und Führungseinrichtung wirkendes, die Hubbewegung steuerndes Gelenkviereck und andererseits an einen auf der Türblattaußen- bzw. -innenseite liegenden Betätigungshebel angeschlossen ist, wobei im Zuge des Hubgestänges wiederum randseitig am Türblatt angeordnete Verriegelungselemente vorgesehen sind, die das Türblatt in der vollständigen Schließlage am Türrahmen arretieren. Problematisch bei einem solchen Türsystem ist, daß für das Hubgestänge eine Vielzahl sehr präziser und stabiler Gelenkteile und ein dementsprechend hoher Gewichts- und Montageaufwand benötigt werden, so daß die Herstellungskosten und vor allem das Gesamtgewicht eines derartigen Türsystems unerwünscht hoch liegen.

Aufgabe der Erfindung ist es, ein Türsystem der eingangs genannten Art zu schaffen, welches hohen Sicherheitsanforderungen genügt und dennoch eine mechanisch einfache Bauweise und ein deutlich verringertes Eigengewicht besitzt.

Diese Aufgabe wird erfindungsgemmäß durch das im Patentanspruch 1 gekennzeichnete Türsystem gelöst.

Erfindungsgemäß wird durch die beanspruchte Kombination von elektrischem Hubantrieb und mechanischer Hubsicherung den strikten Sicherheitsanforderungen eines Passagierflugzeug-Türsystems dadurch in vollem Umfang entsprochen, daß der Hubsicherung die Priorität vor dem elektrischen Hubantrieb zugewiesen wird und Hubsicherung und Hubantrieb systemintern funktionsmäßig vollständig voneinander getrennt sind und nur extern durch einen Türöffnungsbefehl miteinander verkoppelt werden, so daß sich eine systeminterne Fehlansteuerung des elektrischen Hubantriebs nicht auch auf die Hubsicherung ausbreiten kann, mit dem zusätzlichen sicherheitstechnischen Aspekt, daß aufgrund der dualen, einerseits elektrischen und andererseits mechanischen Hubansteuerung dem Risiko eines durch eine rein mechanische oder eine rein elektrische Systemstörung verursachten, fehlerhaften Türöffnungshubs wirksam begegnet wird. Aufbauend auf diesem Sicherheitskonzept wird eine erhebliche bauliche Vereinfachung und Gewichtseinsparung dadurch erzielt, daß aufwendige Übertragungsgestänge für die Hubantriebskräfte und für die türrahmenseitige, hubfeste Arretierung des Türblatts in der vollständigen Schließlage entfallen und stattdessen die Hubsicherung, die aufgrund ihrer selbstsperrenden Wirkung die Aufgabe der Türblatt Arretierung mitübernimmt, gemeinsam mit der singulären elektrischen Antriebseinheit unmittelbar an die Hubkinematik am Türblatt angeschlossen und daher zur Hubbetätigung zusätzlich zu der unkomplizierten elektrischen Beschaltung des Hubantriebs lediglich eine schwach belastete und dementsprechend gewichts- und kostengünstige Freischaltmechanik für die Hubsicherung erforderlich ist, durch die eine leichte und rasche Bedienung des Türsystems gewährleistet wird.

Im Hinblick auf eine besonders platz- und gewichtsparende Bauweise besteht die Hubkinematik gemäß Anspruch 2 vorzugsweise aus einem zwischen der Trag- und Führungseinrichtung und dem Türblatt angeordneten Gelenkviereck und als Hubantrieb ist ein auf einer Diagonalen des Gelenkvierecks wirkender, elektrischer Linearaktuator vorgesehen.

Damit das Türblatt bei einem kompletten Stromausfall sowohl der Primär-als auch der Ersatzstromversorgung oder einer anderen elektrischen Störung des Hubantriebs zumindest einmalig ohne Kraftanstrengung aus der "Plug"-Position angehoben werden kann, ist in weiterer, besonders bevorzugter Ausgestaltung der Erfindung zusätzlich zum elektrischen ein selbstversorgender Nothubantrieb am Türblatt vorgesehen, der gemäß Anspruch 3 aus einem zusätzlich zur elektrischen Antriebseinheit angeordneten, durch einen Notöffnungsbefehl unter gleichzeitiger Freischaltung der Hubsicherung aktivierten Druckluftmotor mit einem zugeordneten, vorzugsweise türblattfesten Druckluftspeicher besteht. Um das Türblatt nicht nur in der abgesenkten, vollständigen Schließlage, sondern auch beim Aufschwenken in der angehobenen Hubposition gegen eine Fehlaktivierung des elektrischen Hubantriebs zu sichern, ist die Hubeinrichtung gemäß Anspruch 4 vorzugsweise in beiden Hubendlagen durch die Hubsicherung selbsttätig türblattfest verriegelt.

Zur gleichzeitigen Ansteuerung der mechanischen Hubsicherung und des elektrischen Hubantriebs ist gemäß Anspruch 5 zweckmäßigerweise zumindest auf der Türblatt-Innenseite ein über ein Freischaltgestänge mit der Hubsicherung verbundener und über elektrische Kontakte den Hubantrieb ansteuernder Handhebel vorgesehen.
Vorzugsweise kann die Tür gemäß Anspruch 6 von beiden Türblattseiten aus unabhängig voneinander bedient werden, und zu diesem Zweck ist das Türblatt mit einem türblattinnenseitigen und einem türblattaußenseitigen Handhebel versehen und beide Handhebel sind gegenseitig mechanisch entkoppelt gemeinsam an das Freischaltgestänge der Hubsicherung angeschlossen. Eine baulich besonders robuste und mechanisch einfache Ausgestaltung der Hubsicherung besteht schließlich nach Anspruch 7 darin, daß diese eine zumindest mit einem Rastelement versehene, drehschlüssig mit der Hubeinrichtung gekoppelte und bei einer Hubbewegung um eine türblattfeste Achse verdrehte Rastscheibe und einen am Türblatt gelagerten, zumindest in einer Hubendlage selbsttätig unter Vorspannung mit dem Rastelement zusammenwirkenden und die Rastscheibe drehfest am Türblatt arretierenden Sperrhebel enthält, welcher durch die Freischaltmechanik der Hubsicherung aus der Einriffsposition mit dem Rastelement zurückziehbar ist.

Die Erfindung wird nunmehr anhand eines Ausführungsbeispieles in Verbindung mit den Zeichnungen näher erläutert. Es zeigen in stark schematisierter Darstellung:
- **Fig. 1**: ein aufschwenkbares Türsystem für ein Passagierflugzeug in vollständiger Schließlage, in der das Türblatt in die untere Hubendlage in den (teilweise gebrochen dargestellten) Türausschnitt des Flugzeugrumpfes abgesenkt ist;
- **Fig. 2**: eine Seitenansicht des Türblatts, der Hubkinematik und des elektrischen Hubantriebs in der angehobenen bzw. abgesenkten Hubendlage;
- **Fig. 3**: die Hubsicherung und die zugeordnete Freischaltmechanik in der abgesenkten Hubendlage.

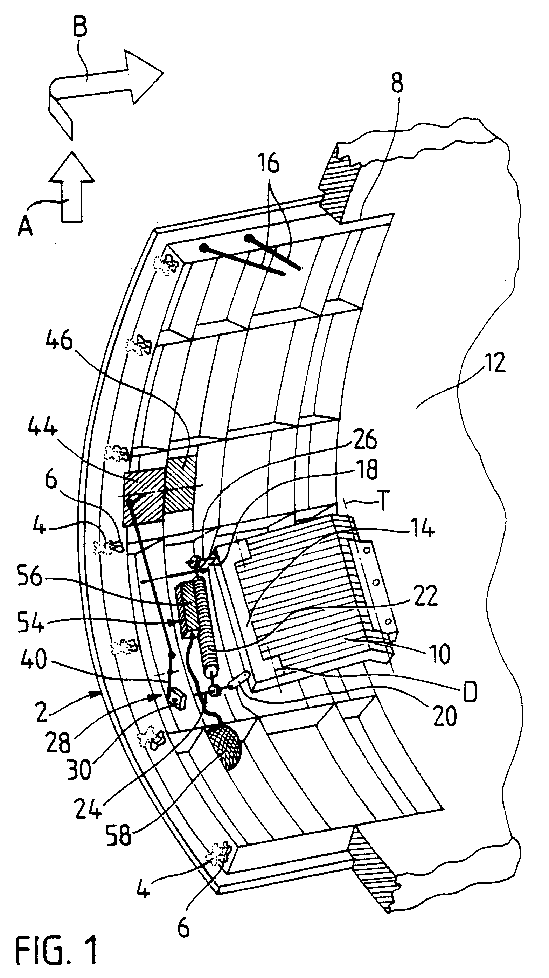

Das in den Fig. gezeigte Türsystem ist vom sogenannten "Plug"-Typ, d.h. das Türblatt 2 ist in der vollständigen Schließlage in einen formschlüssigen Eingriff zwischen türrahmenfesten Aufnahmeelementen 4 (in Fig. 1 schraffiert gezeichnet) und am Türblattrand befestigten Widerlagern 6 abgesenkt und wird zum Öffnen zunächst aus dem formschlüssigen Eingriff mit den Aufnahmeelementen 4 bezüglich des Türausschnitts 8 angehoben (Pfeilrichtung A), bevor es aus dem Türausschnitt 8 nach außen geschwenkt und dann im wesentlichen parallel zur Rumpf-Außenseite in die volle Öffnungslage verfahren werden kann (Pfeilrichtung B).

Die zu diesem Zweck benötigte Trag- und Führungseinrichtung enthält einen Tragarm 10, der einerseits um eine Drehachse T schwenkbar am Türrahmen 12 befestigt und andererseits mit einem um eine Drehachse D gelenkig mit dem Tragarm 10 verbundenen Tragstück 14 versehen ist, sowie zwei zwischen Türblatt 2 und Türrahmen 12 wirksame Steuerlenker 16, durch die das Türblatt 2 in der Bewegungsphase B geführt wird.

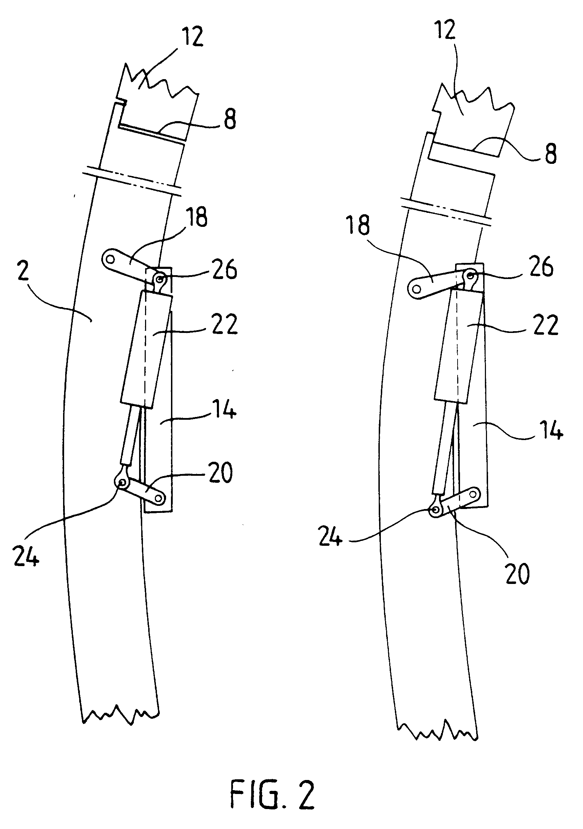

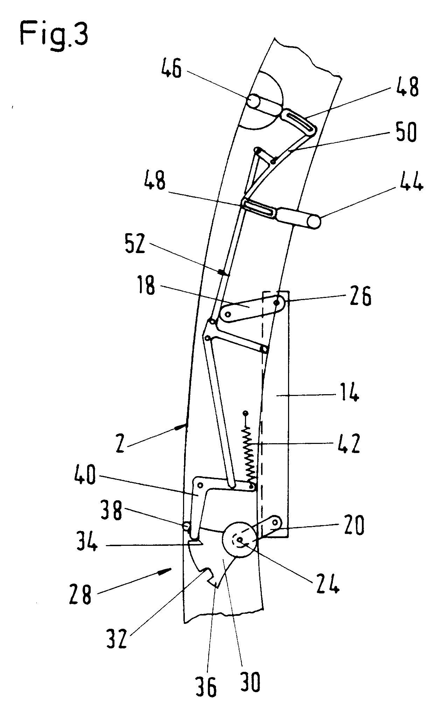

Die Hubbewegung des Türblatts 2 wird durch eine zwischen diesem und dem Tragstück 14 angeordnete Hubkinematik in Form eines Gelenkvierecks gesteuert, welches, wie am besten aus den Fig. 2 und 3 ersichtlich, aus einem oberen, längeren und einem unteren, kürzeren Hublenker 18 und 20 besteht, die jeweils drehbar einerseits mit dem Türblatt 2 und andererseits mit dem Tragstück 14 verbunden sind.

Als Hubantrieb dient ein unmittelbar in die Hubkinematik 18, 20 einbezogener, elektrischer Linearaktuator 22, der auf der Diagonalen des Gelenkvierecks einerseits an die türblattseitige Gelenkwelle 24 des unteren Hublenkers 20 und andererseits an die tragstückseitige Gelenkwelle 26 des oberen Hublenkers 18 angeschlossen und beim Anheben und Absenken des Türblatts 2 unter der Wirkung des Türblattgewichts zugbelastet ist. Der Linearaktuator 22 ist von üblicher, selbstsperrender Bauart und mit einer elektrischen Endabschaltung in der abgesenkten und angehobenen Hubposition des Türblatts 2 versehen.

Ferner enthält das Türsystem eine insgesamt mit 28 bezeichnete, systemintern parallel zum Hubantrieb 24 wirkende Hubsicherung, die die Hubkinematik 18, 20 in beiden Hubendlagen selbsttätig schwenkfest am Türblatt 2 verriegelt. Wie aus Fig. 3 am deutlichsten ersichtlich, umfaßt die Hubsicherung 28 eine über die Gelenkwelle 24 drehfest mit dem Hublenker 20 verbundene, kreissektorförmige Rastscheibe 30 mit Rastöffnungen 32 und 34 und radial vorstehenden Anschlagnasen 36 und 38 für die angehobene bzw. abgesenkte Hubendlage sowie einen um eine türblattfeste Achse schwenkbaren Sperrhebel 40, der durch eine Zugfeder 42 in Anlage an der Rastscheibe 30 gehalten wird. Bei einer Fehlaktivierung des Linearaktuators 22 wird der Bewegungshub des Türblatts 2 durch den Sperrhebel 22 und die Anschlagnasen 36 bzw. 38 begrenzt. Zusätzlich greift der Sperrhebel 40 in beiden Hubendpositionen unter der Federkraftwirkung in eine der Rastöffnungen 32 bzw. 34 der Rastscheibe 30, so daß das Türblatt 2 unabhängig vom Linearaktuator 22 gegen eine Hubbewegung bezüglich des Türrahmens 12 arretiert ist.

Zur Hubbetätigung wird die Hubsicherung 28 von einem türblattinnenseitigen oder einem türblattaußenseitigen Handhebel 44 bzw. 46 mechanisch freigeschaltet und gleichzeitig der Linearaktuator 22 über handhebelbetätigte Kontakte (nicht gezeigt) elektrisch angesteuert. Wie am besten aus Fig. 3 ersichtlich, sind die Handhebel 44 und 46 jeweils über eine Totgangverbindung (Langloch 48) an einen zweiarmigen Kipphebel 50 angeschlossen, welcher über ein Freischaltgestänge 52 mit dem Sperrhebel 40 verbunden ist. Wird einer der Handhebel 44 oder 46 gezogen, so verschwenkt der Kipphebel 50 und der Sperrhebel 40 wird über das Freischaltgestänge 52 aus der Verrastung mit der Rastscheibe 30 herausgedreht. In dieser Stellung läßt sich der herausgezogene Handhebel 44, 46 nach oben oder unten verkippen, wodurch ein entsprechender elektrischer Taster für den Aufwärts- oder Abwärtshub des Linearaktuators 22 geschlossen wird. Infolge der mechanischen Entkoppelung der beiden Handhebel 44 und 46 verbleibt beim Ziehen des einen der jeweils unbetätigte, andere Handhebel in der zurückgezogenen Ruheposition.

Damit die Tür bei einem Totalausfall oder einer Störung der Hubelektrik zumindest einmalig ohne Kraftanstrengung zu öffnen ist, ist das Türblatt 2 in Tandembauweise zum elektrischen Hubantrieb 22 mit einem selbstversorgenden Notantrieb 54 versehen, welcher aus einem auf der gleichen Achse wie der Elektromotor des Hubantriebs 22 normalerweise "leer" mitlaufenden Druckluftmotor 56 und einem zugeordneten, am Türblatt 2 befestigten Druckluftspeicher 58 besteht. Bei einem Ausfall der Hubelektrik wird der Nothubantrieb 54 durch Betätigung eines inneren oder äußeren, jeweils verdeckt neben den Handhebeln 44 bzw. 46 angebrachten Nothubhebels (nicht gezeigt) aktiviert, wodurch die Hubsicherung 28 freigeschaltet und gleichzeitig ein normalerweise geschlossenes Sperrventil zwischen Druckluftspeicher 58 und Druckluftmotor 56 geöffnet wird.

Damit ein Absenken des Türblatts 2 verhindert wird, während die Tür aufgeschwenkt ist (Bewegungsphase B gemäß Fig. 1), ist im Stromkreis für den Linearaktuator 22 ein (nicht gezeigter) elektrischer Taster am Tragarm 10 vorgesehen: Solange das Türblatt 2 zwar angehoben, aber nicht aufgeschwenkt ist, ist der Taster geschlossen. Wird das Türblatt 2 nach außen aufgeschwenkt, so unterbricht der Taster den Stromkreis für den Linearaktuator 22 und eine Betätigung der Handhebel 44 oder 46 bleibt ohne Folge, weil der selbstsperrende Linearaktuator 22 ein Absenken verhindert. Im angehobenen Zustand kann die Tür von Hand auf- und zugeschwenkt werden, wird aber zumindest im Notfall durch einen zwischen Tragarm 10 und Türrahmen 12 wirkenden, fremdkraftbetätigten Schwenkantrieb (nicht gezeigt) längs der Bewegungsbahn B verfahren.

## Patentansprüche

1. Türsystem, insbesondere für ein Passagierflugzeug,
mit einer zwischen Türblatt (2) und Türrahmen (12) wirkenden Trag- und Führungseinrichtung (10, 14), einer zwischen dieser und dem Türblatt angeordneten Hubeinrichtung (18, 20, 22), die das Türblatt am Ende der Schließbewegung quer zur Bewegungsbahn der Führungseinrichtung unter formschlüssigem Eingriff mit türrahmenfesten Aufnahmeelementen (4) in die vollständige Schließlage verfährt und zu Beginn des Öffnungsvorganges mit entgegengesetzter Hubrichtung aus dem formschlüssigen Eingriff herausbewegt, und einer Türblatt-Verriegelung, wobei die Hubeinrichtung eine Hubkinematik (18, 20) zur Steuerung der Türblatt-Hubbewegung sowie einen zugeordneten Hubantrieb einschließlich einer elektrischen Antriebseinheit (22) für die Hubkinematik enthält,
**dadurch gekennzeichnet, daß**
zur Türblatt-Verriegelung eine zwischen Türblatt (2) und Hubeinrichtung (18, 20, 22) wirksame, parallel zur elektrischen Ansteuerung der Antriebseinheit (22) mechanisch durch einen Türoffnungsbefehl freischaltbare und in der vollständigen Schließlage der Tür selbsttätig in eine die Hubeinrichtung türblattfest verriegelnde Sperrlage umschaltende Hubsicherung (28) vorgesehen ist.

2. Türsystem nach Anspruch 1,
**dadurch gekennzeichnet,** daß
die Hubkinematik aus einem zwischen der Trag- und Führungseinrichtung (10, 14) und dem Türblatt (2) angeordneten Gelenkviereck (18, 20) besteht und als Hubantrieb ein auf einer Diagonalen des Gelenkvierecks wirkender, elektrischer Linearaktuator (22) vorgesehen ist.

3. Türsystem nach Anspruch 1 oder 2,
**dadurch gekennzeichnet,** daß
zusätzlich zur elektrischen Antriebseinheit (22) am Türblatt (2) ein durch einen Notöffnungsbefehl unter gleichzeitiger Freischaltung der Hubsicherung (28) aktivierter, pneumatischer Nullhub an Nothubantrieb (54) mit einem zugeordneten Druckluftspeicher (58) für einen zumindest einmaligen Öffnungshub des Türblatts angeordnet ist.

4. Türsystem nach einem der vorhergehenden Ansprüche,
**dadurch gekennzeichnet,** daß
die Hubeinrichtung durch die Hubsicherung (28) in beiden Hubendlagen selbsttätig türblattfest verriegelt ist.

5. Türsystem nach einem der vorhergehenden Ansprüche,
**dadurch gekennzeichnet,** daß
zur Hubbetätigung zumindest ein von der Türinnenseite zugänglicher, über ein Freischaltgestänge (52) mit der Hubsicherung (28) verbundener und über elektrische Kontakte den Hubantrieb ansteuernder Handhebel (44, 46) vorgesehen ist.

6. Türsystem nach Anspruch 5,
**dadurch gekennzeichnet,** daß
zur Hubbetätigung ein von der Türinnenseite und ein von der Türaußenseite zugänglicher Handhebel (44 und 46) vorgesehen sind, die gegenseitig mechanisch entkoppelt (bei 48, 50) gemeinsam an das Freischaltgestänge (52) angeschlossen sind.

7. Türsystem nach einem der vorhergehenden Ansprüche
**dadurch gekennzeichnet,** daß
die Hubsicherung (28) eine zumindest mit einem Rastelement (Rastöffnungen 32, 34) versehene, drehschlüssig mit der Hubeinrichtung gekoppelte und bei einer Hubbewegung um eine türblattfeste Achse (24) verdrehte Rastscheibe (30) und einen am Türblatt (2) gelagerten, zumindest in einer Hubendlage selbsttätig unter Vorspannung mit dem Rastelement zusammenwirkenden und die Rastscheibe drehfest am Türblatt arretierenden, zur mechanischen Freischaltung der Hubsicherung aus der Eingriffsposition mit dem Rastelement zurückziehbaren Sperrhebel (40) enthält.

## Claims

1. Door system, especially for a passenger aircraft, having a support and guide device (10, 14) acting between a door leaf (2) and a door frame (12), having a lifting device (18, 20, 22) which is arranged between the support and guide device and the door leaf, which lifting device moves the door leaf into the completely closed position at the end of the closure movement at right angles to the movement path of the guide device whilst engaging in an interlocking manner with receiving elements (4) fixed with respect to the door frame and, at the beginning of the opening process, moves the door leaf out of the interlocking engagement in the opposite lifting direction, and having a door leaf locking device, the lifting device containing a lifting mechanism (18, 20) for controlling the door leaf lifting movement and an associated lifting drive including an electrical drive unit (22) for the lifting mechanism,
characterised in that, in order to lock the door leaf, a lifting safety device (28) is provided acting between the door leaf (2) and the lifting device (18, 20, 22), which is mechanically releasable in parallel with the electrical actuation of the drive unit (22) by means of a command to open the door and, in the completely closed position of the door, switches over automatically to a retention position locking the lifting device securely to the door leaf.

2. Door system according to claim 1, characterised in that the lifting mechanism comprises a four-bar linkage (18, 20) arranged between the support and guide device (10, 14) and the door leaf (2), and an electrical linear actuator (22), acting on a diagonal of the four-bar linkage, is provided as the lifting drive.

3. Door system according to claim 1 or claim 2, characterised in that, in addition to the electrical drive unit (22), a pneumatic emergency lifting drive (54) activated by an emergency opening command with simultaneous release of the lifting safety device (28) and having an associated compressed air storage device (58) is arranged on the door leaf (2) for effecting at least one opening lifting movement of the door leaf.

4. Door system according to any one of the preceding claims, characterised in that the lifting device is automatically locked securely to the door leaf in both lifting end positions by the lifting safety device (28).

5. Door system according to any one of the preceding claims, characterised in that at least one hand lever (44, 46), accessible from the inner side of the door and connected to the lifting safety device (28) by means of a release linkage (52) and actuating the lifting drive by means of electrical contacts, is provided in order to actuate lifting.

6. Door system according to claim 5, characterised in that, in order to actuate lifting, a hand lever accessible from the inner side of the door and a hand lever accessible from the outer side Of the door (44 and 46) are provided which are both connected to the release linkage (52) while being mutually mechanically independent (at 48, 50).

7. Door system according to any one of the preceding claims, characterised in that the lifting safety device (28) contains a locking plate (30) which is provided at least with one locking element (notches 32, 34) and is coupled in a rotationally secure manner to the lifting device and which locking plate (30), during lifting movement, is rotated about an axis (24) fixed with respect to the door leaf, the lifting safety device (28) further containing a locking lever (40) which is mounted on the door leaf (2) and which co-operates automatically with the locking element under pre-loading at least in one lifting end position, which locking lever (40) arrests the locking plate against rotation on the door leaf, and can be withdrawn from the position of engagement with the locking element to release the lifting safety device mechanically.

## Revendications

1. Système de porte, destiné notamment à un avion de transport de passagers, comportant un dispositif de support et de guidage (10, 14) agissant entre le vantail (2) de la porte et le cadre (12) de la porte, un dispositif de levée (18, 20, 22) disposé entre celui-ci et le vantail de la porte, qui à la fin du mouvement de fermeture déplace le vantail de la porte transversalement à la trajectoire déplacement du dispositif de guidage dans la position de fermeture complète en l'engageant par complémentarité de forme dans des éléments de réception (4) solidaires du cadre de la porte, et le sort au début du processus d'ouverture de l'engagement par complémentarité de forme dans le sens de levée inverse, et un verrouillage du vantail de la porte, le dispositif de levée comprenant une cinématique de levée (18, 20), qui est destinée à la commande du mouvement de levée du vantail de la porte, ainsi qu'un entraînement de levée associé et une unité d'entraînement électrique (22) pour la cinématique de levée,
caractérisé en ce que,
une sécurité de levée (28) est prévue pour le verrouillage du vantail de la porte, qui agit entre le vantail (2) de la porte et le dispositif de levée (18, 20, 22), qui peut être débloquée mécaniquement en parallèle avec la commande électrique de l'unité d'entraînement (22) par un ordre d'ouverture de la porte, et qui dans la position entièrement fermée de la porte commute automatiquement dans une position de blocage dans laquelle le dispositif de levée est verrouillé solidairement avec le vantail de la porte.

2. Système de porte selon la revendication 1,
caractérisé en ce que
la cinématique de levée est constituée d'un quadrilatère articulé (18, 20) disposé entre le dispositif de support et de guidage (10, 14) et le vantail (2) de la porte, et en ce qu'il est prévu un actionneur linéaire électrique (22) agissant sur une diagonale de la cinématique de levée en tant qu'entraînement de levée.

3. Système de porte selon la revendication 1 ou 2,
caractérisé en ce que,
un entraînement de levée de secours (54) avec un accumulateur d'air comprimé (58) associé est disposé sur le vantail (2) de la porte en plus de l'unité d'entraînement électrique (22), lequel est activé par un ordre d'ouverture de secours en effectuant une levée de secours pneumatique et en débloquant simultanément la sécurité de levée (28) pour assurer au moins une unique levée d'ouverture du vantail de la porte.

4. Système de porte selon l'une quelconque des revendications précédentes,
caractérisé en ce que,
dans les deux positions finales de levée, le dispositif de levée est verrouillé automatiquement sur le vantail de la porte par la sécurité de levée (28).

5. Système de porte selon l'une quelconque des revendications précédentes,
caractérisé en ce que,
pour l'actionnement de la levée, il est prévu au moins un levier à main (44, 46) accessible à partir du côté intérieur de la porte, qui est relié à la sécurité de levée (28) par l'intermédiaire d'une tringlerie de déblocage (52), et qui commande l'entraînement de levée par l'intermédiaire de contacts électriques.

6. Système de porte selon la revendication 5,
caractérisé en ce que,
pour l'actionnement de la levée, il est prévu un levier à main accessible à partir du côté intérieur de la porte et un levier à main accessible à partir du côté extérieur de la porte (44 et 46), qui sont reliés en commun à la tringlerie de déblocage (52) en étant découplés mécaniquement l'un par rapport à l'autre (au niveau de 48, 50).

7. Système de porte selon l'une quelconque des revendications précédentes,
caractérisé en ce que
la sécurité de levée (28) comporte un disque d'encliquetage (30) muni d'au moins un élément d'encliquetage (ouvertures d'encliquetage 32, 34), lequel est couplé en rotation avec le dispositif de levée, et qui est tourné autour d'un axe (24) solidaire du vantail de la porte lors d'un mouvement de levée, et un levier de blocage (40) monté sur le vantail (2) de la porte qui, dans au moins une position finale de levée, agit automatiquement par précontrainte conjointement avec l'élément d'encliquetage, et qui bloque le disque d'encliquetage en rotation sur le vantail de la porte, qui peut être retiré de la position d'engagement avec l'élément d'encliquetage pour le déblocage mécanique de la sécurité de levée.
